## Europäisches Patentamt
## European Patent Office
## Office européen des brevets

(11) Veröffentlichungsnummer : **0 023 496**
**B1**

(12)

# EUROPÄISCHE PATENTSCHRIFT

(45) Veröffentlichungstag der Patentschrift :
**21.03.84**

(51) Int. Cl.³ : **A 46 B 13/02**

(21) Anmeldenummer : **80900235.5**

(22) Anmeldetag : **01.02.80**

(86) Internationale Anmeldenummer :
**PCT/CH 80/00014**

(87) Internationale Veröffentlichungsnummer :
**WO WO/80015 (07.08.80 Gazettee 80/18)**

(54) **ELEKTRISCHES ZAHNREINIGUNGSGERÄT.**

(30) Priorität : **05.02.79 DE 2904327**

(43) Veröffentlichungstag der Anmeldung :
**11.02.81 Patentblatt 81/06**

(45) Bekanntmachung des Hinweises auf die Patenterteilung : **21.03.84 Patentblatt 84/12**

(84) Benannte Vertragsstaaten :
**AT CH DE FR GB NL**

(56) Entgegenhaltungen :
**CH-A-   368 780**
**CH-A-   425 719**
**CH-A-   463 457**
**DE-A- 2 726 451**
**DE-B- 1 239 449**
**DE-B- 1 242 736**
**DE-C-   716 474**
**US-A- 3 156 804**
**US-A- 3 235 897**
**US-A- 3 685 080**

(73) Patentinhaber : **TRISA BÜRSTENFABRIK AG TRIENGEN**
**CH-6234 Triengen (CH)**

(72) Erfinder : **FISCHER, Franz**
**Bätzenmoos 201**
**CH-6234 Triengen (CH)**

(74) Vertreter : **Alder, Ulrich (CH) et al**
**Patentanwälte Schaad, Balass, Sandmeier, Alder**
**Dufourstrasse 101 Postfach**
**CH-8034 Zürich (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Elektrisches Zahnreinigungsgerät

Die vorliegende Erfindung betrifft ein elektrisches Zahnreinigungsgerät gemäss Oberbegriff des Anspruches 1.

Bei dem aus der CH-A 425 719 bekannten Zahnreinigungsgerät ist der Antriebsmotor im hintern Gehäuseteil verschiebbar gelagert und stützt sich einerseits am vordern Gehäuseteil und andererseits über eine Druckfeder am Boden des hintern Gehäuseteiles ab. Unter Wirkung dieser Druckfeder werden die beiden durch einen O-Ring zusammengehaltenen Gehäuseteile unter Zusammenpressung des O-Ringes gegeneinander verspannt, was eine einen wasserdichten Abschluss gewährleistende Deformation des O-Ringes zur Folge hat. Bei dieser Lösung ist das Zusammenfügen der beiden Gehäuseteile wohl verhältnismässig einfach, doch sind hiezu gewisse konstruktive Massnahmen nötig, wie beispielsweise das Abstützen des Motors am vordern Gehäuseteil und das Vorsehen einer Druckfeder, welche die Herstellung verteuern und ein zeitaufwendigeres Zusammenbauen bedingen. Ein Trennen der Gehäuseteile ist nicht ohne Zerstörung des O-Ringes möglich.

Bei der in der CH-A-463 457 beschriebenen elektrischen Zahnbürste greift der Antriebsmotor mit einem Führungsansatz in eine Zentrierplatte ein, die mit dem Antriebsmotor verschraubt ist. Die Zentrierplatte liegt an ihrem Umfang auf der Innenseite des Gehäuses an und wird durch ein Federelement gegen einen Absatz auf der Gehäuseinnenseite gedrückt. Schwingungen des Antriebsmotors können sich direkt auf die Zentrierplatte und von dieser auf das Gehäuse übertragen, was auch das Federelement nicht zu vermeiden vermag. Das Gehäuse besteht aus wenigstens zwei, auf nicht näher beschriebene Weise miteinander verbundenen Teilen.

Aus der US-A-3 235 897 ist nun eine Lösung gemäss Oberbegriff des Anspruches 1 bekannt, bei der der Antriebsmotor einen abstehenden, starren Wulst aufweist, welcher zwischen den beiden miteinander verschraubten Gehäuseteilen festgeklemmt ist. Zur Abdichtung des Gehäuseinnern ist zwischen dem Wulst und dem einen Gehäuseteil ein Dichtungsring eingelegt, während auf der gegenüberliegenden Seite der Wulst direkt am andern Gehäuseteil anliegt. Der Antriebsmotor, der vermittels des festgeklemmten Wulstes in seiner festgelegten Lage fixiert ist, ist jedoch starr gelagert, so dass sich die Motorschwingungen auf das Gehäuse übertragen können. Daran vermag auch der verhältnismässig dünne Dichtungsring wenig zu ändern.

Ferner ist es aus der DE-C-716 674 bekannt, bei einem Staubsauger am Umfang des Gebläsemotors eine Nut vorzusehen, in die ein Gummiring eingreift. Dieser Gummiring wird zwischen den Gehäuseteilen festgeklemmt und dient nun einerseits zum Abdichten und andererseits zur Lagerung des Motors.

Der vorliegenden Erfindung liegt nun die Aufgabe zugrunde, ein funktionssicheres, angenehm zu handhabendes und im Unterhalt anspruchsloses Zahnreinigungsgerät der eingangs genannten Art zu schaffen, das sich auf einfache und zeitsparende Weise zusammenbauen lässt und dessen Gehäuseteile sich bei Bedarf ohne Zerstörung wieder voneinander trennen lassen.

Diese Aufgabe wird gemäss Kennzeichen des Anspruches 1 gelöst.

Durch das im Gehäuse festgehaltene Schwingungsdämpfungselement ist die Lage des Antriebsmotors im Gehäuse genau festgelegt. Ueberdies wird der Motor in dieser Lage fixiert. Das Schwingungsdämpfungselement bringt jedoch weiter den Vorteil mit sich, dass die Schwingungen des Motors nicht oder nur in sehr bescheidenem Mass auf das Gehäuse übertragen werden. Dadurch wird der Bedienungskomfort erhöht. Das Schwingungsdämpfungselement kann zudem noch als Dichtungsorgan ausgebildet werden, was bei zwischen den beiden Gehäuseteilen festgeklemmtem Schwingungsdämpfungselement eine gleichzeitige Abdichtung der zwischen den Gehäuseteilen vorhandenen Trennfuge ermöglicht.

Da die beiden Gehäuseteile mittels einer Schnappverbindung, welche vorzugsweise durch Nocken am einen Gehäuseteil und diese hintergreifende Rastnasen am andern Gehäuseteil gebildet wird, miteinander verbunden sind, ist ein besonders einfaches Zusammenbauen möglich. Durch das zwischen den Gehäuseteilen festgeklemmte Schwingungsdämpfungselement werden die Teile der Schnappverbindung gegeneinander verspannt. Trotzdem lassen sich jedoch die Gehäuseteile durch Lösen dieser Schnappverbindung ohne Zerstörung des Schwingungsdämpfungselementes wieder voneinander trennen, falls eine Reparatur oder ein Austausch von im Gehäuse untergebrachten Bauelementen notwendig sein sollte.

Die Montage des Zahnreinigungsgerätes wird weiter vereinfacht, wenn zumindest der Motor und gegebenenfalls weitere Bauelemente an einem Trägerelement befestigt ist, an dem das ringförmige, in einer Umfangnut angeordnete Schwingungsdämpfungselement angebracht ist.

Ist, wie das an sich bekannt ist, im Innern des Gehäuses ein magnetisch betätigbarer Schalter zum Ein- und Ausschalten des Antriebsmotors untergebracht, der durch ein Magnetelement geöffnet und geschlossen wird, das an einem auf der Aussenseite des Gehäuses verschiebbar geführten Betätigungsorgan angeordnet ist, so sind vorzugsweise zur lösbaren Arretierung des Betätigungsorganes in den Endlagen an der Gehäuseaussenseite oder am Betätigungsorgan zwei überfahrbare Anschläge und am Betätigungsorgan bzw. an der Gehäuseaussenseite ein mit den Anschlägen zusammenwirkendes Rastelement angeordnet. Zweckmässigerweise werden die Anschläge durch einen am einen Gehäuseteil angeordneten, in Verschiebungsrichtung des Betätigungsorganes verlaufenden Steg gebildet, der in den beiden Endlagen des Betätigungsorganes vom am letzteren angebrachten Rastelement hintergriffen wird.

Im folgenden wird anhand der Zeichnung ein Ausführungsbeispiel des Erfindungsgegenstandes näher erläutert. Es zeigt schematisch :

Figur 1 einen Längsschnitt durch einen Teil eines Zahnreinigungsgerätes, und

Figur 2 in Draufsicht in Richtung des Pfeiles A in Fig. 1 den Bereich des Betätigungsorganes.

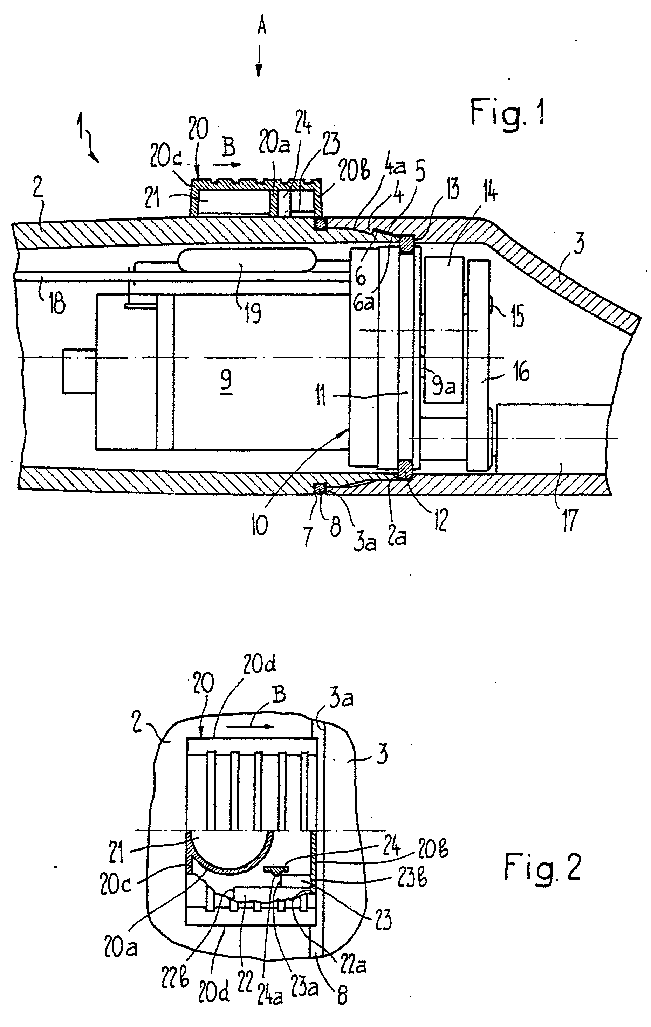

Die Fig. 1 zeigt im Längsschnitt einen Teil einer elektrisch betriebenen Zahnbürste, welche ein Gehäuse 1 aufweist, das aus einem hintern, als Handgriff dienenden Gehäuseteil 2 und einem vordern Gehäuseteil 3 besteht. Die beiden Gehäuseteile 2 und 3, welche vorzugsweise aus einem Kunststoffmaterial bestehen, sind mittels einer Schnappverbindung miteinander verbunden. Zu diesem Zwecke sind auf der Innenseite des Gehäuseteiles 3 am Umfang verteilte Rastnasen 4 angeordnet, die durch eine Hinterschneidung 5 im Gehäuseteil 3 gebildet werden. Diese Rastnasen 4 hintergreifen Nocken 6, die auf der Aussenseite des andern Gehäuseteiles 2 in dessen Umfangsrichtung verteilt vorgesehen sind. Bei der dargestellten Ausführungsform sind beispielsweise drei Rastnasen 4 bzw. Nocken 6 vorgesehen, welche in Umfangsrichtung des entsprechenden Gehäuseteiles 2 bzw. 3 um jeweils 120° gegeneinander versetzt sind. Sowohl die Rastnasen 4 wie auch die Nocken 6 weisen schräg verlaufende Auflaufflächen 4 a bzw. 6 a für den zugeordneten Nocken 6 bzw. die zugeordnete Rastnase 4 auf. In einem Abstand von den Nocken 6 verläuft an der Aussenseite des hintern Gehäuseteiles 2 eine Rille 7, in der ein Dichtungsring 8, z. B. ein O-Ring, angeordnet ist. Der untere Rand 3 a des vordern Gehäuseteiles 3 drückt bei zusammengebauten Gehäuseteilen 2 und 3 wie gezeigt auf diesen Dichtungsring 8, so dass er zwischen diesem Rand 3 a und den Begrenzungswänden der Rille 7 etwas zusammengedrückt wird, um eine einwandfreie Dichtwirkung entfalten zu können.

Im Innern des Gehäuses ist ein elektrischen Antriebsmotor 9 untergebracht, der an einem im wesentlichen zylindrischen Trägerelement 10 befestigt ist. Dieses Trägerelement 10 ist mit einer Ringnut 11 versehen, in welche ein Ring 12 aus einem elastischen Material, vorzugsweise ein O-Ring, eingelegt ist. Wie die Figur 1 zeigt, wird dieser Ring 12 bei zusammengebauten Gehäuseteilen 2, 3 zwischen dem Rand 2 a des hintern Gehäuseteiles 2 und einem Absatz 13 im Gehäuseteil 3 zusammengepresst. Das hat einerseits ein Festhalten des Trägerelementes 10 samt Antriebsmotor 9 in ihrer Lage und zudem ein Abdichten des Gehäuseinnern gegen aussen zur Folge. Im weitern wirkt dieser Ring 12 schwingungsdämpfend, so dass die durch den Antriebsmotor 9 hervorgerufenen Schwingungen nicht oder nur in ganz geringem Mass auf das Gehäuse 1 und auf die letzteres haltende Hand des Benützers übertragen werden.

Auf der Motorwelle 9 a sitzt ein in der Figur 1 nicht sichtbares Zahnrad, das mit einem auf dem Trägerelement 10 drehbar gelagerten Zahnrad 14 mit Innenverzahnung kämmt. Dieses Zahnrad 14 weist einen exzentrisch angebrachten Zapfen 15 auf, der in eine Längsnut eines Schwinghebels 16 eingreift. Dieser Schwinghebel 16 ist mit einem Zahnbürstenträger 17 drehfest verbunden, der sich auf bekannte Weise über den vordern Gehäuseteil 3 hinauserstreckt und an seinem freien Ende eine Zahnbürste trägt. Wird der Antriebsmotor 9 in Betrieb gesetzt, so wird der Schwinghebel 16 über das Zahnrad 14 und den Zapfen 15 in eine Schwingbewegung versetzt, die über den Zahnbürstenträger 17 auf die Zahnbürste übertragen wird.

Am Trägerelement 10 ist ebenfalls eine gedruckte Schaltplatte 18 befestigt, die die für den Betrieb des Antriebsmotors 9 erforderlichen Bauelemente trägt. An diese Schaltplatte 18 ist auch ein durch den hintern Gehäuseteil 2 dichtend hindurch geführtes, in Fig. 1 nicht gezeigtes Zuleitungskabel angeschlossen, das an eine elektrische Speisequelle, z. B. eine Steckdose, angeschlossen werden kann. Von den auf dieser Schaltplatte 18 angebrachten Bauelementen ist in der Fig. 1 nur ein magnetischer Schalter 19 (Reed — Schalter) gezeigt. Mittels dieses Schalters 19 wird der Antriebsmotor 9 ein- und ausgeschaltet. Der Schalter 19 ist an sich bekannter Bauart und weist zwei nicht gezeigte Kontakte auf, die durch ein Magnetelement 21 betätigt werden, das in einem auf der Aussenseite des Gehäuseteiles 2 angeordneten Betätigungsorgan 20 untergebracht ist. Ein elektrisches Zahnreinigungsgerät mit einem derartigen magnetischen Schalter ist aus der CH-A-459 142 an sich bekannt. Bei dieser bekannten Lösung ist dieser Schalter an der Gehäuseinnenwand befestigt, während beim erfindungsgemässen Zahnreinigungsgerät der magnetische Schalter 19 an der Schaltplatte 18 befestigt ist, wie das die Fig. 1 zeigt. Durch diese Massnahme wird die Montage dieses Schalters 19 gegenüber der erwähnten bekannten Lösung erheblich erleichtert.

Das Betätigungsorgan 20 ist als Scheiber ausgebildet, der in Richtung des Pfeiles B aus seiner in den Figuren gezeigten Ausschaltstellung in eine Einschaltstellung verschoben werden kann, in welcher die beiden Kontakte des Schalters 19 durch das Magnetelement 21 auf bekannte Weise geschlossen sind. Das innen weitgehend hohle und zum Gehäuseteil 2 hin offene Betätigungsorgan 20 weist eine ring- oder rechteckförmige Wand 20 a auf, welche einen Aufnahmeraum für das Magnetelement 21 festlegt, wie das insbesondere aus der Fig. 2 hervorgeht, in welcher in Teil der Deckwand des Betätigungsorganes 20 weggeschnitten dargestellt ist.

Zur Längsführung des Betätigungsorganes 20 sind am hintern Gehäuseteil 2 zwei in einem Abstand voneinander angeordnete und in Verschiebungsrichtung B des Betätigungsorganes 20 verlaufende Führungsschienen 22 angebracht, von denen in Fig. 2 nur die eine gezeigt ist. Jede dieser Führungsschienen 22 wird von einer auf der Innenseite jeder Seitenwand 20 d des Betätigungselementes 20 angebrachten, in den Figuren nicht sichtbaren Leiste untergriffen, wodurch das Betätigungsorgan 20 auf den Führungsschienen 22 gehalten und entlang derselben verschoben werden kann. Diese Leisten bilden zusammen mit den Führungsschienen 22 eine Schnappverbindung, was es erlaubt, das Betätigungsorgan 20 bei der Montage durch Druckeinwirkung mit den Führungsschienen 22 in Eingriff zu bringen. Die beiden Führungsschienen 22 dienen zudem als ortsfeste Wegbegrenzungsanschläge für das Betätigungsorgan 20. In der in den Figuren gezeigten Ausschaltstellung des Betätigungsorganes 20 liegt die Vorderwand 20 b des Betätigungsorganes 20 an der vordern Stirnfläche 22 a der Führungsschienen 22 an, wie das die Fig. 2 zeigt. Wird das Betätigungsorgan 20 in Richtung des Pfeiles B in seine Einschaltstellung bewegt, so wird diese Bewegung dadurch begrenzt, dass die Hinterwand 20 c des Betätigungsorganes 20 an der hintern Stirnfläche 22 b der Führungsschienen 22 anschlägt.

Zur lösbaren Arretierung des Betätigungsorganes 20 in jeder seiner Endlagen sind angrenzend an die Führungsschienen 22 zwei Stege 23 am hintern Gehäuseteil 2 angebracht, von denen in der Fig. 1 der eine und in Fig. 2 der andere Steg dargestellt ist. Die beiden sich gegenüber liegenden Stirnflächen 23 a und 23 b wirken als überfahrbarer Anschlag für ein Rastelement 24, das sich von der Decke des Betätigungsorganes 20 nach unten erstreckt. Jedes dieser beiden Rastelemente 24 ist mit einem Vorsprung versehen, mit dem das Rastelement 24 in jeder Endlage des Betätigungsorganes 20 den zugeordneten Steg 23 hintergreift, wobei der Vorsprung 24 a an der Stirnfläche 23 a bzw. 23 b des Steges 23 anliegt. Die Rastelemente 24 sind elastisch deformierbar, so dass sich beim Ausüben einer Schiebebewegung auf das Betätigungsorgan 20 die Rastelemente 24 elastisch ausbiegen und ein Verschieben des Betätigungsorganes 20 erlauben. Sobald das Betätigungsorgan 20 seine andere Endlage erreicht, kehren die Rastelemente 24 wieder in ihre Ruhelage zurück, in der — wie bereits erwähnt — die Vorsprünge 24 a die Stege 23 hintergreifen. Somit wird auf einfache Weise der Verschiebeweg des Betätigungsorganes 20 begrenzt und das Betätigungsorgan 20 in jeder seiner Endlagen lösbar arretiert.

Das beschriebene Zahnreinigungsgerät lässt sich auf einfache Weise zusammenbauen. Das Trägerelement 10, an dem der Antriebsmotor 9 und die Schaltplatte 18 mit den übrigen Bauteilen sowie das Zahnrad 14 befestigt sind, wird mit dem Ring 12 auf den Rand 2 a des hintern Gehäuseteiles 2 aufgesetzt. Anschliessend wird der vordere Gehäuseteil 3, in dem der Zahnbürstenträger 17 und der Schwinghebel 16 gelagert sind, auf den hintern Gehäuseteil 2 aufgeschoben, wobei die Rastnasen 4 mit ihren Auflaufflächen 4 a auf den Auflaufflächen 6 a der Nocken 6 auflaufen, was eine elastische Deformation des Randbereiches des Gehäuseteiles 3 und/oder der Gehäuseteiles 2 zur Folge hat. Ist der vordere Gehäuseteil 3 vollständig aufgeschoben, so können die Rastnasen 4 die Nocken 6 hintergreifen, womit eine einwandfreie Verbindung zwischen den beiden Gehäuseteilen 2 und 3 erhalten wird. Zudem wird der Ring 12 aus elastischem Material wie auch der Dichtungsring 8 zusammengedrückt, so dass eine einwandfreie Abdichtung des Gehäuseinnern nach aussen gewährleistet ist. Schlussendlich wird noch das Betätigungsorgan 20 auf den hintern Gehäuseteil 2 aufgedrückt.

Da das Gehäuse 1 auf seiner Aussenseite keine Vertiefungen aufweist, in denen sich Schmutz ansammeln könnte, lässt sich das beschriebene Zahnpflegegerät ohne Mühe selbst im Bereich des Betätigungsorganes 20 sauberhalten. Durch die beiden Dichtungen 8 und 12 wird das Eindringen von Wasser oder andern Fremdkörpern in das Gehäuseinnere einwandfrei vermieden. Da in den beiden Gehäuseteilen 2 und 3 keine schwer abzudichtenden Durchführungen für den Betätigungsschalter für den Motor 9 vorhanden sind, ist somit ein dichter Abschluss des Gehäuses sichergestellt.

Die Schnappverbindung zwischen den beiden Gehäuseteilen 2 und 3 erlaubt ein Oeffnen des Gehäuses 1, wodurch eine Reparatur oder ein Austausch der im Gehäuseinnern untergebrachten Bauteile möglich macht, ohne das Gehäuse 1 oder den Dichtungsring 12 zuerstören zu müssen.

**Ansprüche**

1. Elektrisches Zahnreinigungsgerät mit einem aus zwei miteinander verbundenen Gehäuseteilen (2, 3) gebildeten Gehäuse (1) und einem einen Träger (17) für eine Zahnbürste antreibenden Antriebsmotor (9), der im Gehäuse (1) untergebracht und mittels eines zwischen den beiden Gehäuseteilen (2, 3) festgeklemmten Halteteils (12) in seiner Lage fixiert ist, dadurch gekennzeichnet, dass der Halteteil ein Schwingungsdämpfungselement (12) aus einem elastisch komprimierbaren Werkstoff ist und dass die beiden Gehäuseteile (2, 3) mittels einer Schnappverbindung, die durch direkt miteinander zusammenwirkende Verbindungselemente (4, 6) an jedem Gehäuseteil (2, 3) gebildet ist, miteinander verbunden sind.

2. Zahnreinigungsgerät nach Anspruch 1, dadurch gekennzeichnet, dass das Schwingungsdämpfungselement (12) im weitern als Dichtungsorgan ausgebildet ist.

3. Zahnreinigungsgerät nach Anspruch 1 oder 2, dadurch gekennzeichnet, dass das Schwingungsdämpfungselement ein Ring (12), insbesondere ein O-Ring, ist.

4. Zahnreinigungsgerät nach einem der Ansprüche 1-3, dadurch gekennzeichnet, dass zumindest der Antriebsmotor (9) und gegebenenfalls weitere Bauelemente (19) an einem Trägerelement (10) befestigt ist, an dem das Schwingungsdämpfungselement (12) angebracht ist.

5. Zahnreinigungsgerät nach den Ansprüchen 3 und 4, dadurch gekennzeichnet, dass das ringförmige Schwingungsdämpfungselement (12) in eine Nut (11) am Umfang des Trägerelementes (10) eingelassen ist.

6. Zahnreinigungsgerät nach Anspruch 1, dadurch gekennzeichnet, dass die Verbindungselemente der Rastverbindung durch am einen Gehäuseteil (2) vorhandene Nocken (6) und am andern Gehäuseteil (3) vorgesehene Rastnasen (4), die die Nocken (6) hintergreifen, gebildet sind.

7. Zahnreinigungsgerät nach einem der Ansprüche 1-6, mit einem im Innern des Gehäuses (1) untergebrachten magnetisch betätigbaren Schalter (19) zum Ein- und Ausschalten des Antriebsmotors (9), der durch ein Magentelement (21) geöffnet und geschlossen wird, das an einem auf der Aussenseite des Gehäuses (1) verschiebbar geführten Betätigungsorgan (20) angeordnet ist, dadurch gekennzeichnet, dass zur lösbaren Arretierung des Betätigungsorganes (20) in dessen Endlagen an der Gehäuseaussenseite oder am Betätigungsorgan (20) zwei überfahrbare Anschläge (23a, 23b) und am Betätigungsorgan (20) bzw. an der Gehäuseaussenseite ein mit diesen Anschlägen (23a, 23b) zusammenwirkendes Rastelement (24) angeordnet sind.

8. Zahnreinigungsgerät nach Anspruch 7, dadurch gekennzeichnet, dass die Anschläge (23a, 23b) und/oder das Rastelement (24) elastisch deformierbar sind.

9. Zahnreinigungsgerät nach Anspruch 7 oder 8, dadurch gekennzeichnet, dass die Anschläge (23a, 23b) durch einen am einen Gehäuseteil (2) angeordneten, in Verschiebungsrichtung (B) des Betätigungsorganes (20) verlaufenden Steg (23) gebildet sind, der in den beiden Endlagen des Betätigungsorganes (20) vom am letzteren angebrachten Rastelement (24) hintergriffen wird.

10. Zahnreinigungsgerät nach einem der Ansprüche 7-9, dadurch gekennzeichnet, dass das Betätigungsorgan (20) mittels einer Schnappverbindung mit dem Gehäuse (1) verbunden ist.

11. Zahnreinigungsgerät nach Anspruch 10, dadurch gekennzeichnet, dass das Betätigungsorgan (20) mit jeder seiner beiden Seitenwände (20d) eine am einen Gehäuseteil (2) angebrachte Führungsschiene (22) untergreift und durch diese Führungsschiene (22) längsgeführt ist.

12. Zahnreinigungsgerät nach Anspruch 11, dadurch gekennzeichnet, dass jede Führungsschiene (22) als fester Wegbegrenzungsanschlag für das Betätigungsorgan (20) dient.

13. Zahnreinigungsgerät nach den Ansprüchen 4 und 7, dadurch gekennzeichnet, dass der Schalter (19) auf einer am Trägerelement (10) befestigten gedruckten Schaltplatte (18) angebracht ist.

## Claims

1. An electrical tooth cleaning apparatus containing a housing (1) composed of at least two mutually interconnected housing portions (2, 3) and a drive motor (9) driving a support (17) for a tooth brush, the drive motor (9) being mounted in the housing (1) and being fixed in its position by means of a holder element (12) fixedly clamped between both of the housing portions (2, 3), characterized by the features that the holder element is a vibration dampening element (12) formed of elastically compressable material and that both of the housing portions (2, 3) are interconnected with one another by means of a snap connection being formed by directly interacting connecting means (4, 6) on each of the housing portions (2, 3).

2. Tooth cleaning apparatus according to Claim 1, characterized by the features that the vibration dampening element (12) is further constructed as a sealing element.

3. Tooth cleaning apparatus according to one of the Claims 1 or 2, characterized by the features that the vibration dampening element is a ring (12), especially a O-ring.

4. Tooth cleaning apparatus according to one of the Claims 1 to 3, characterized by the features that at least the drive motor (9) and possibly further components (19) are secured at a support element (10), at which there is mounted the vibration dampening element (12).

5. Tooth cleaning apparatus according to Claims 3 and 4, characterized by the features that the ring-shaped vibration dampening element (12) is inserted into a groove (11) at the circumference of the support element (10).

6. Tooth cleaning apparatus according to Claim 1, characterized by the features that the connecting means at the latching connection are formed by cams (6) at a housing portion (2) and by latching noses (4) at the other housing portion (3) which engage behind the cams (6).

7. Tooth cleaning apparatus according to one of the Claims 1 to 6, containing a magnetically actuatable switch (19) mounted internally of the housing (1) for switching-on and switching-off the drive motor (9), which is opened and closed by a magnetic element (21), which is arranged at an actuation element (20) displaceably guided at the outside of the housing (1), characterized by the features that for the releasable arresting of the actuation element (20) in its end positions there are arranged at the housing outer surface or at the actuation element (20) two stops (23a, 23b) which can be travelled-over and at the actuation element (20) and at the housing outer surface a latching element (24) which coacts with such stops (23a, 23b).

8. Tooth cleaning apparatus according to Claim 7, characterized by the features that the stops (23a, 23b) and/or the latching element (24) are elastically deformable.

9. Tooth cleaning apparatus according to one of the Claims 7 or 8, characterized by the features that the stops (23a, 23b) are formed by a web (23) arranged at one housing portion (2) and extending in the displacement direction (B) of the actuation element (20) and the latching element (24) mounted at the actuation element engages in both end positions of the actuation element (20) behind the web (23).

10. Tooth cleaning apparatus according to one of the Claims 7 to 9, characterized by the features that the actuation element (20) is connected by means of a snap connection with the housing (1).

11. Tooth cleaning apparatus according to Claim 10, characterized by the features that the actuation element (20) engages by means of each its two side walls (20d) below a guide rail (22) mounted at one housing portion (2) and is guided in lengthwise direction by this guide rail (22).

12. Tooth cleaning apparatus according to Claim 11, characterized by the features that each guide rail (22) serves as a fixed displacement limiting stop for the actuation element (20).

13. Tooth cleaning apparatus according to Claims 4 and 7, characterized by the features that the switch (19) is mounted upon a printed circuit board (18) secured at the support element (10).

## Revendications

1. Brosse à dents électrique comportant un boîtier (1) formé de deux parties (2, 3) de boîtier reliées l'une à l'autre et un moteur d'entraînement (9) entraînant un support (17) pour une brosse à dents proprement dite, moteur logé dans le boîtier (1) et fixé en position au moyen d'une pièce de retenue (12) bridée entre les deux parties (2, 3) du boîtier, caractérisée en ce que la pièce de retenue est un élément amortisseur de vibration (12) en un matériau élastiquement comprimable ; et en ce que les deux parties (2, 3) du boîtier sont reliées l'une à l'autre au moyen d'une liaison par clipsage formée, sur chaque partie du boîtier (2, 3), par des éléments de liaison (4, 6) qui collaborent directement l'un avec l'autre.

2. Brosse à dents électrique selon la revendication 1, caractérisée en ce que l'élément amortisseur de vibration (12) est de plus conçu comme organe d'étanchéité.

3. Brosse à dents électrique selon la revendication 1, ou la revendication 2, caractérisée en ce que l'élément amortisseur de vibration est une bague (12) en particulier un joint torique.

4. Brosse à dents électrique selon l'une des revendications 1-3, caractérisée en ce qu'au moins le moteur d'entraînement (9) et éventuellement d'autres composants (19) sont fixés à un support (10) auquel est rapporté l'élément amortisseur de vibration (12).

5. Brosse à dents électrique selon les revendications 3 et 4, caractérisée en ce que l'élément amortisseur de vibration (12), de forme annulaire, est logé dans une rainure (11) à la périphérie du support (10).

6. Brosse à dents électrique selon la revendication 1, caractérisée en ce que les éléments de la liaison de crantage sont formés d'ergots (6) prévus sur la partie (2) du boîtier et de talons (4) prévus sur l'autre partie (3) du boîtier et qui saisissent les ergots (6) par derrière.

7. Brosse à dents électrique selon l'une des revendications 1-6, comportant un interrupteur (19), manœuvrable magnétiquement et logé à l'intérieur du boîtier (1), pour la mise en circuit et hors-circuit les moteurs d'entraînement (9), ouvert et fermé par un élément magnétique (21) disposé sur un organe de manœuvre (20) guidé, avec possibilité de coulissement, sur la face externe du boîtier (1), caractérisée en ce que pour le blocage réversible de l'organe de manœuvre (20) à ses positions d'extrémité, deux butées (23) franchissables, sont disposées sur la face externe du boîtier ou sur l'organe de manœuvre (20) et un élément de crantage (24), collaborant avec ces butées (23a, 23b) est disposé sur l'organe de manœuvre (20) ou sur la face externe du boîtier.

8. Brosse à dents électrique selon la revendication 7, caractérisée en ce que les butées (23a, 23b) et/ou l'élément de crantage (24) sont élastiquement déformables.

9. Brosse à dents électrique selon la revendication 7 ou la revendication 8, caractérisée en ce que les butées (23a, 23b) sont constituées d'un bossage (23) disposé sur une partie du boîtier (2), courant selon la direction de coulissement (B) de l'organe de manœuvre (20) et qui, dans les deux positions d'extrémité de l'organe de manœuvre (20), est saisi par derrière par l'élément de crantage (24) rapporté sur cet organe.

10. Brosse à dents électrique selon l'une des revendications 7-9, caractérisée en ce que l'organe de manœuvre (20) est relié au boîtier (1) au moyen d'une liaison par clipsage.

11. Brosse à dents électrique selon la revendication 10, caractérisée en ce que l'organe de manœuvre (20) vient saisir par dessous, par chacune de ses deux parois latérales (20d), un rail de guidage rapporté sur une partie (2) du boîtier et qu'il est guidé longitudinalement par ce rail de guidage (22).

12. Brosse à dents électrique selon la revendication 11, caractérisée en ce que chaque rail de guidage (22) sert de butée fixe de limitation de course de l'organe de manœuvre (20).

13. Brosse à dents électrique selon la revendication 4 et 7, caractérisée en ce que l'interrupteur (19) est rapporté sur une plaquette (18) de circuit imprimé fixée sur le support (10).

Fig. 1

Fig. 2